# EUROPEAN PATENT SPECIFICATION

(11) **EP 0 425 548 B1**
(45) Date of publication and mention of the grant of the patent: **31.08.1994**
(21) Application number: 89908188.9
(22) Date of filing: 17.07.1989
(51) Int. Cl.: D07B 1/20, A01K 75/00

(54) **A FLOATABLE CORD AND A METHOD FOR MANUFACTURING THE SAME**
SCHWIMMFÄHIGES KABEL UND VERFAHREN ZUR HERSTELLUNG
CORDAGE FLOTTANT ET SON PROCEDE DE FABRICATION

(30) Priority: 15.07.1988 FI 883365
(43) Date of publication of application: 08.05.1991
(73) Proprietor: PIIRTO, Timo, 60510 Hyllykallio (FI)
(72) Inventor: PIIRTO, Timo, 60510 Hyllykallio (FI)
(74) Representative: Bjerkén, Jarl Hakan
(86) International application number: FI8900134
(87) International publication number: WO9000644

(56) References cited:
- DE-A- 1 760 535
- DK-B- 153 975
- NO-C- 78 776
- US-A- 2 274 255
- US-A- 3 830 009

## Description

The invention relates to a floatable cord disclosed in the preamble of claim 1, as well as to a method for manufacturing floatable cord, disclosed in the preamble of claim 3.

The invention relates especially to a floatable cord, which can be used as the head rope of a net. The demands on the head rope are great, as far as the buoyancy, weather resistance and easiness in handling are concerned.

Up to now, a cord around which there are disposed floating pieces of e.g. cellular polystyrene at regular intervals has been used. These pieces cause difficulties in using the cord, because said pieces tend to get entangled in the cord, with each other and with the net, especially when the net is gathered.

Further, a cord having floating pieces strung on a yarn at short intervals and a plastics braiding braided around the yarn and the floating pieces is known on the market. It has been capable of eliminating the above-mentioned drawbacks partly. The manufacture of the cord in question is, however, laborious and moreover it has not sufficient buoyancy. Due to its construction the cord is also prone to damages.

A cord according to the preamble of claim 1 is known through DE-A-1 760 535. The flexibility of this cord is obtained by manufacturing the core out of continuous fibres and providing small separate particles in the space between the core and a sheath surrounding the latter. Although this results in a satisfying flexibility the construction of this cord is rather complex and the manufacture thereof is to complicated.

It is an object of the invention to eliminate the above-mentioned drawbacks and to provide a floatable cord, combining easiness in the manufacture, good floating properties, strong construction as well as simple handling. For achieving this, the cord in accordance with the invention is mainly characterised by what is disclosed in the characterising portion of claim 1.

By the provision of said cuts in the way indicated it is possible to obtain a statisfying flexibility also with a substantially solid floating material in greater pieces, so that the cord will be very easy to manufacture and may be given very good floating properties as well.

The invention is described more closely in the following description with references to accompanying drawings, wherein
- Fig. 1: shows a cord of the invention in longitudinal section,
- Fig. 2: shows an alternative embodiment of the cord, also as a longitudinal section,
- Fig. 3: shows another alternative embodiment of the cord as a longitudinal section,
- Fig. 4: is a schematic representation of an apparatus used for the manufacture of the cord, the method steps being also shown schematically and
- Fig. 5: is a sectional view of a die used for the manufacture of the cord.

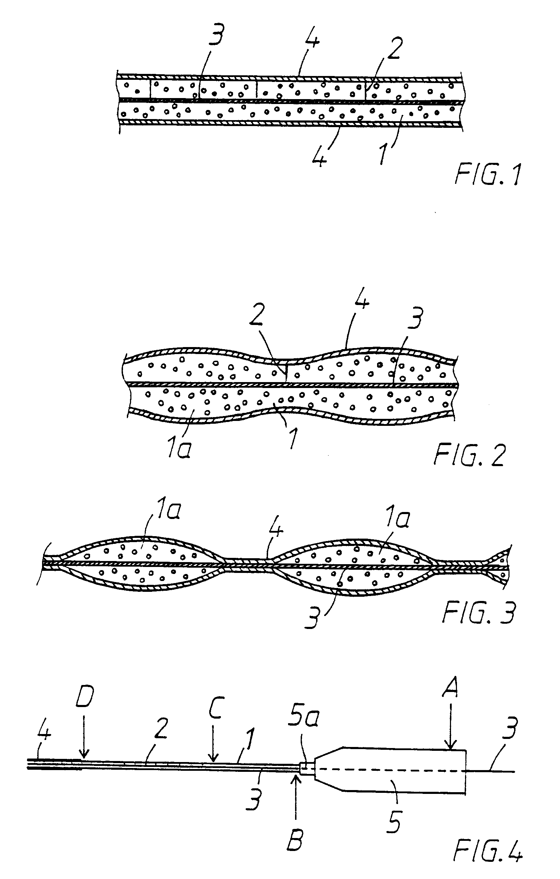

The interior of the cord shown in Figs. 1-3 comprises floating material 1 having a density lower than 1,0. The floating material forms a core region in the longitudinal direction of the cord. In the case shown by Fig. 1 the core region has a cross-section of constant magnitude and of substantially circular shape in a direction perpendicular to the longitudinal direction of the cord. The core region further comprises a core yarn 3, around which the floating material 1 is disposed and which most preferably consists of heat-resistant fibre, such as carbon fibre. For increasing the flexibility, cuts 2 spaced from each other in the longitudinal direction of the cord and extending over a part of the cross-sectional area of the floating material are made in the core region, but the cuts do not cut off the floating material 1 into entirely separate parts in the longitudinal direction of the cord.

Fig. 2 shows an alternative shape of the cord not having a cross-section of constant magnitude in the core region, but the cross-section varies in the longitudinal direction of the cord by forming at regular intervals thicker portions 1a in a wave-like manner. By this arrangement, an appearance more resembling a traditional head rope of a net is provided for the cord. The above-described cuts 2 are formed between the thicker portions 1a.

Fig. 3 shows an alternative where regions having only the core yarn 3 in the core region without a surrounding floating material 1 are left in the longitudinal direction of the cord between the thicker portions 1a of Fig. 2. In this case the thicker portions also have a wave-like or a "shuttle-like" configuration, i.e. their cross-sections vary by widening and narrowing smoothly in the longitudinal direction of the cord.

Figs. 1-3 also show a surface braiding 4 of the cord braided around the core region. The braiding can consist of any common braiding material, e.g. of a suitable plastics tape. The surface braiding lies against the interior of the cord along the whole length of the cord, that is, also against the exposed core yarn 3 between the thicker portions 1a as shown in Fig. 3.

The plastics material 1 forming the core region comprises one or several polyolefins, such as polyethylene or copolymers of a polyolefin, such as ethylene-vinylacetate-copolymer. The former grades are commonly known by abbreviations HDPE, LDPE and LLDPE according to the properties, especially density of the material used. The latter is commonly known by abbreviation EVA. The aforementioned materials can be used for the floating material 1 of the core region of the cord either as such or blended with each other. The density of said materials can be still lowered considerably by forming empty spaces, such as cavities and/or bubbles in the core region during the manufacture. In practice this can be accomplished by foaming the plastics material used, in other words, foaming agent or expanding agent (blowing agent) is introduced into the material when manufacturing the core region of the cord. Various such agents are known in plastic technology. An agent which at the moulding temperature of the plastics is gaseous or generates gas, which creates bubbles and/or cavities in the melted plastic, may act as the foaming agent. Azodicarbonamide or 1,1-azobisformamide can be mentioned as an example of such foaming agent.

The thermoplastic plastics material may also be cross-linked before its solidification. This alternative is advantageous especially when using polyethylene. A suitable peroxide can be used as the cross-linking agent and the cross-linking can be induced e.g. by means of UHF-radiation.

Experimental runs have been conducted with different thermoplastic plastics and different foaming agents for finding suitable floating material. A blend of LDPE and EVA, wherein the portion of the vinylacetate monomer is ca. 8% of the total weight of the polymer blend, has allowed to obtain cord core regions having a density within the range of 0,35 to 0,5. Same densities are obtained by using solely LDPE, LLDPE or EVA as the raw material. If EVA or a mixture of polyethylene and EVA is used, the portion of the vinylacetate monomer is preferably 3 to 40 w-%. In all cases foaming agent can be used, depending on its grade in the proportion of 0,5 to 5 w-% of the total amount of the plastics raw-material. When azodicarbonamide is used as the foaming agent, its amount is usually 0,5 to 1,5%. Some of the results are shown in the appended table, where properties of samples made by injection moulding are described.

Fig. 4 illustrates a practical arrangement for manufacturing the cord of the invention. The cord is manufactured by extrusion in an extruder designated 5 in Fig. 3. Melted plastics material is extruded to a continuous core region of the cord through a die 5a so that it surrounds the core yarn 3, which is pulled as a continuous yarn out of the die 5a by means of the aftertreatment devices for the cord, which are known as such and are therefore not described in more detail. The granular plastics rawmaterial and the powder-like foaming agent are supplied to the extruder at the location denoted by arrow A, and the plastic material melts inside the extruder, whereafter the foaming takes place at the exit of the melted plastic out of the die 5a or at the location of the die. The foamed plastic material emerging from the die 5a becomes solidified around the core yarn 3 and the solidification can be accelerated by providing cooling in the line, whereafter at location C cuts 2 are accomplished by means of a suitable device, e.g. a knife performing a regular cutting movement, while the core yarn 3 and the surrounding floating material 1 continuously passes the location C. In the direction of travel of the cord after the location C the surface layer 4 is braided around the core region at the location D and this step can be carried out by means of automatic well-known braiding machines. In general, devices generally known in the manufacture of cords can be used as aftertreatment devices for the cord. Further, well-known methods can be utilized in the control of temperature in the extrusion.

The cuts 2 can be formed in the cord also using a method, where opposite moving plates or rotating discs indent the core material as the plastic material is still in a deformable state.

The temperature in the extrusion is adjusted preferably to a range of 180° to 145° by decreasing it from 180° at the supply to 140° at the die.

When using polyolefins or copolymers thereof, such as EVA, their polymeric chains can be cross-linked by using a suitable peroxide as the cross-linking agent, acting in suitable conditions as the initiator of the cross-linking reaction. The cross-linking agent is supplied to the extruder and the cross-linking is induced by high-activity radiation, such as UHF-radiation, for instance at once at the location where the plastics material exits out of the die (point B). The activation of the peroxides can be accomplished also thermally, and on the other hand solely radiation may effect the cross-linking of the polymeric chain.

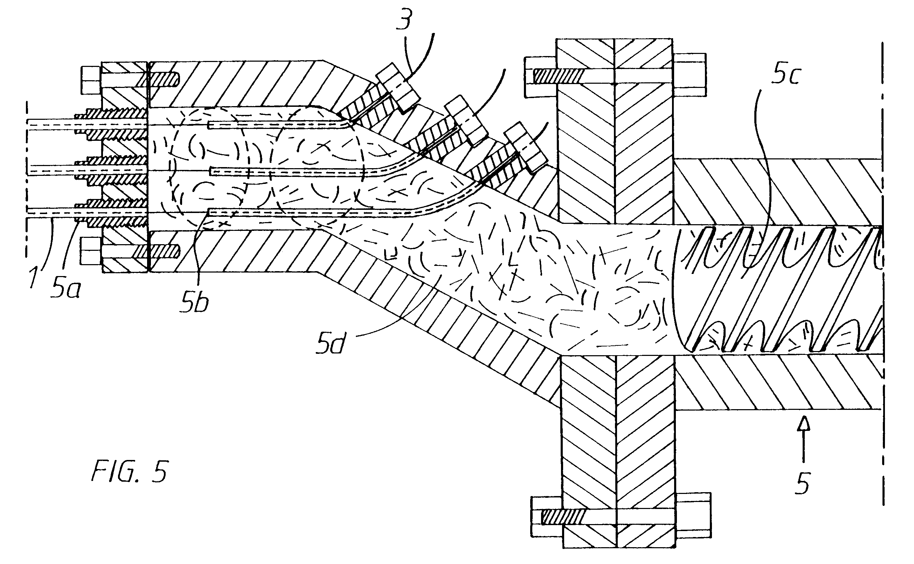

Several cords can be manufactured using the same extruder 5 by providing it with several dies, as illustrated in Fig. 5. In this Figure there are three dies 5a, through which their respective core yarns 3 pass. The yarns exit each from their respective openings 5b into a chamber 5d located between the end of the extruder screw 5c and the dies 5a, and they pass through the melted plastics material within the chamber to the dies 5a. Any device used in plastics technology can be used as an extruder. In the device shown by Fig. 5 the cross-sectional area of the flow chamber 5c narrows down in the direction of flow of the plastics material, the narrowing being represented by broken lines. In this fashion the maintenance of a sufficient high pressure is ensured so that the foaming will take place only at the die 5a or immediately thereafter.

The thicker portions 1a shown in Figs. 2 and 3 may also be manufactured by extrusion, either by changing periodically the extrusion rate of the plastics material through the die 5a of a constant size, or by mechanically altering the magnitude of the diameter of the die 5a in a periodic fashion. The surface layer 4 can be braided around such kind of core region as well, using automatic braiding devices. It is to be noted, that if one wishes to increase the strength of the cord, two or several parallel core yarns can be led through the same die and the plastics material is formed around the yarns.

The advantage of an extrusion method is the production rate, for instance in comparison with methods, where a surface braiding is wrapped about separate particles in order to manufacture a continuous cord. It must also be noted, that the core region can be manufactured using the method of the invention without any braiding, whereafter the half-fabricate so obtained can be stored in an intermediate storage or it can be transported, and the braiding of the surface layer can be carried out thereafter.

The cord of the invention is applicable especially to fishing as the head rope of a surface net or a submerged net, and in this context by the term "floatable cord" is meant a cord floating on the surface of water when it has no weights. The cross-section of the core yarn 3 is in the aforementioned fishing net application lower than 1 mm and the "effective" diameter of the floating material of the cord is 3 to 10 mm depending on the desired buoyancy. By effective diameter is meant the diameter of a circle having an area equal to an area obtained by dividing the total volume of the floating material 1 by the length of the cord. The degree of foaming, being controllable in the terms of the amount of the foaming agent, is determined by the immersion depth used. Cords which will be immersed down to considerable depths must have smaller portion of bubbles and/or cavities in the floating material so as to better endure the pressure of water.

The cord according to the invention has the following beneficial characteristics
- frost-resistance,
- resistance to sun light,
- resistance to oils, solvents etc.,
- resistance to pressure, good tensile strength,
- bending without breaking
Some experiments have been conducted with the cord of the invention in order to test the compatibility of the cord with severe circumstances at sea. The experiments have been conducted in 7°C sea water.

A cord manufactured from polyethylene of LLDPE grade using the method of the invention (weight 12,0 g/m, total diameter ca. 7,0 mm and the diameter of the core region ca. 5,5 mm, tensile strength 148 kg, i.e. 38 N/m² when dry) required a mass of 11,3 g/m in order to be submerged in the water. The resistance to pressure was tested in a test chamber, where a water pressure corresponding to a depth of 1000 m was generated. The cord was found to possess surprisingly good pressure resistance characteristics, which is illustrated by the fact, that the cord retained its buoyancy at this pressure (in other words, the position of a section of cord 1,75 m in length was straight up when it was fastened at its one end onto the bottom of the test chamber).

The cord was also subjected to long-term testing at a pressure corresponding to a depth of 1000 m in the same circumstances as above. The weight increase after two days was ca. 40% due to the intruded water, but it was, however, low enough to retain the buoyancy of the cord. Moreover, it was observed that when the cord was allowed to dry in the air after the experiment, the weight ingrease dropped to 6% and after 5 days it was only 0,5%. Hence, the intrusion of the water into the cord is reversible.

The good stability of the cord is still illustrated by the fact, that when the cord was charged with a mass of 75 kg (load ca. 740 N), the elongation was 20%, but when the charging ceased the cord returned to its original lenght.

The invention is by no means restricted solely to the examples disclosed in the description, but it can be modified within the scope of the invention presented in the claims. Hence, the selection of various thermoplastic plastics materials and blend ratios as well as the amount of foaming agents can be chosen according to the desired final density, the selection being of course effected by cost factors. Various polyethylene grades, especially LDPE and LLDPE proved to be tough, as well as ethylene-vinylacetatecopolymers, are preferred due to their low costs. Further the advantage of polyolefins and copolymers thereof is inherent low density and good resistance to environmental circumstances, such as sea water.

## Claims

1. Floatable cord for use especially as a head rope of a net, the interior of the cord comprising floating material (1) having a density lower than 1,0, the floating material (1) being manufactured of a thermoplastic plastics material, wherein empty spaces are provided for decreasing the density, the plastics material forming in the longitudinal direction of the cord a continuous core region of a constant cross-section, or a core region widening and narrowing in a wave-like fashion, **characterised** in that cuts (2) are provided in the core region spaced from each other in the longitudinal direction of the cord in order to increase the flexibility.

2. Cord as claimed in some of the preceding claims, **characterised** in that the core region comprises a core yarn (3) extending in the longitudinal direction of the cord inside the floating material (1) , said yarn being preferably of heat-resistant fibre, such as carbon fibre.

3. Method for manufacture of a floatable cord as claimed in claim 1, in which method floating material having a density lower than 1,0 is provided in the interior of the cord, the interior of the cord is manufactured to form in the longitudinal direction of the cord a continuous core region of a constant cross-section, or a core region widening and narrowing in a wave-like manner, from a melted thermoplastic material, **characterised** in that cuts (2) spaced from each other in the longitudinal direction of the core region are made in the core region.

4. Method as claimed in claim 3, **characterised** in that the cuts (2) are made in the core region before the plastics material (1) has solified to its final stiffness.

5. Method as claimed in claim 3, **characterised** in that cuts (2) are made in the core region after the plastics material (1) has solified to its final stiffness.

6. Method as claimed in some of the preceding claims 3 to 5, **characterised** in that the plastics material is brought around a core yarn (3), when in a melted state and it is solified, around the core yarn, which is preferably of heat-resistant fibre, such as carbon fibre.

## Patentansprüche

1. Schwimmfähige Schnur für die Verwendung insbesondere als Hauptseil eines Netzes, wobei das Innere der Schnur schwimmfähiges Material (1) mit einer Dichte unter 1,0 enthält, wobei das schwimmfähige Material (1) aus thermoplastischem Kunststoffmaterial hergestellt ist, in dem leere Zwischenräume vorgesehen sind, um die Dichte zu verringern, wobei das Kunststoffmaterial in der Längsrichtung der Schnur einen gleichförmigen Kernbereich von konstantem Querschnitt oder einen sich wellenförmig erweiternden und verengenden Kernbereich bildet, **dadurch gekennzeichnet**, daß Einschnitte (2) in dem Kernbereich vorgesehen sind, die im Abstand voneinander in der Längsrichtung der Schnur angeordnet sind, um die Flexibilität zu erhöhen.

2. Schnur nach einem der vorhergehenden Ansprüche, **dadurch gekennzeichnet**, daß der Kernbereich ein Kerngarn (3) enthält, das sich in Längsrichtung der Schnur in dem schwimmfähigen Material (1) erstreckt, wobei das Garn vorzugsweise aus einer wärmebeständigen Faser wie Karbonfiber besteht.

3. Verfahren zur Herstellung einer schwimmfähigen Schnur nach Anspruch 1, bei welchem ein schwimmfähiges Material mit einer Dichte unter 1,0 im Innern der Schnur vorgesehen ist, wobei das Innere der Schnur so hergestellt ist, daß es in der Längsrichtung der Schnur einen gleichförmigen Kernbereich mit einem konstanten Querschnitt oder einen sich wellenförmig erweiternden und verengenden Kernbereich bildet, **dadurch gekennzeichnet**, daß Einschnitte (2) in dem Kernbereich angebracht sind, die im Abstand voneinander in der Längsrichtung des Kernbereichs angeordnet sind.

4. Verfahren nach Anspruch 3, **dadurch gekennzeichnet**, daß die Einschnitte (2) in dem Kernbereich angebracht werden, bevor das Kunststoffmaterial (1) zu seiner endgültigen Steifheit erstarrt ist.

5. Verfahren nach Anspruch 3, **dadurch gekennzeichnet**, daß Einschnitte (2) in dem Kernbereich angebracht werden, nachdem das Kunststoffmaterial (1) zu seiner endgültigen Steifheit erstarrt ist.

6. Verfahren nach einem der vorhergehenden Ansprüche 3 bis 5, **dadurch gekennzeichnet**, daß das Kunststoffmaterial um ein Kerngarn (3) herum angebracht ist, wenn es sich in einem geschmolzenen Zustand befindet, und es um das Kerngarn herum fest wird, das vorzugsweise aus einer wärmebeständigen Faser wie Karbonfiber besteht.

## Revendications

1. Cordage flottant destiné à être utilisé en particulier comme corde de tête d'un filet, l'intérieur du cordage comprenant une matière flottante (1) ayant une densité inférieure à 1,0, la matière flottante (1) étant fabriquée en matière plastique thermoplastique, dans lequel des espaces vides sont prévus pour diminuer la densité, la matière plastique formant dans le sens longitudinal du cordage une région centrale continue ayant une section transversale constante, ou une région centrale s'élargissant et se rétrécissant à la manière d'une onde, caractérisé en ce que des coupures (2) sont prévues dans la région centrale, espacées les unes des autres dans le sens longitudinal du cordage, afin d'augmenter la flexibilité.

2. Cordage revendiqué dans la revendication précédente, caractérisé en ce que la région centrale comprend un fil central (3) s'étendant dans le sens longitudinal du cordage à l'intérieur de la matière flottante (1), ledit fil étant de préférence constitué d'une fibre résistante à la chaleur, telle qu'une fibre de carbone.

3. Procédé de fabrication d'un cordage flottant revendiqué dans la revendication 1, procédé dans lequel la matière flottante ayant une densité inférieure à 1,0 se trouve à l'intérieur du cordage, l'intérieur du cordage est fabriqué pour former dans le sens longitudinal du cordage une région centrale continue ayant une section transversale constante, ou une région centrale s'élargissant et se rétrécissant à la manière d'une onde, à partir d'une matière thermoplastique fondue, caractérisé en ce que des coupures (2) espacées les unes des autres dans le sens longitudinal de la région centrale sont faites dans la région centrale.

4. Procédé revendiqué dans la revendication 3, caractérisé en ce que les coupures (2) sont faites dans la région centrale avant que la matière plastique (1) se soit solidifiée pour atteindre sa rigidité finale.

5. Procédé revendiqué dans la revendication 3, caractérisé en ce que des coupures (2) sont faites dans la région centrale après que la matière plastique (1) se soit solidifiée pour atteindre sa rigidité finale.

6. Procédé revendiqué dans certaines des revendications précédentes 3 à 5, caractérisé en ce que la matière plastique (1) est amenée autour d'un fil central (3), lorsqu'elle est à l'état fondu et qu'elle se solidifie, autour du fil central qui est de préférence constitué d'une fibre résistante à la chaleur telle qu'une fibre de carbone.
